# EUROPEAN PATENT APPLICATION

(11) **EP 1 916 622 A1**
(43) Date of publication of application: **30.04.2008**
(21) Application number: 07118167.1
(22) Date of filing: 10.10.2007
(51) Int. Cl.: G06Q 30/00

(54) **Service information providing apparatus and service information providing method**

(30) Priority: 12.10.2006 JP 2006279024
(71) Applicant: NTT DoCoMo, Inc., Chiyoda-ku Tokyo 100-6150 (JP)
(72) Inventor: Sakaguchi, Takuji c/o NTT DoCoMo, Inc., IP Dept., Chiyoda-ku Tokyo 100-6150 (JP); Yabusaki, Masami c/o NTT DoCoMo, Inc., IP Dept., Chiyoda-ku Tokyo 100-6150 (JP)
(74) Representative: Grosse, Wolfgang

(57) **Abstract**

A service information providing apparatus is provided (30). A shop information extracting section (36) extracts shop information belonging to a preference genre determined by a preference genre determining section from a shop information database. A shop ranking calculating section (37) calculates a usage frequency ranking of a shop included in the shop information. A shop list transmitting section (35) generates a shop list based on a usage frequency ranking of shops and transmits to a portable phone. A service information extracting section (36) extracts, from a service information database, service information belonging to the preference genre from among the service information of a shop corresponding to shop selection information received from the portable phone (10). A service ranking calculating section calculates (37) a usage frequency ranking of services included in the service information. A service list transmitting section (40) generates a list based on the usage frequency ranking of the services and transmits to the portable phone.

## Description

### BACKGROUND OF THE INVENTION

### Field of the Invention

The present invention relates to a service information providing apparatus and a service information providing method.

### Related Background Art

In related art, there is known, as a method to effectively provide service information such as shop advertisement, a method in which service information is provided according to information such as a current position of a portable phone and preference of a user based on personal information of the user, etc. (for example, refer to Japanese Patent Application Laid-open No. 2001- 123027 A).

### SUMMARY OF THE INVENTION

In the above-described system, however, because the service information is provided from the information provider in a one-way manner, the provided service information may not be service information desired by the user.

The present invention has been conceived in consideration of the above, and provides a service information providing apparatus and a service information providing method in which service information desired by a user can be accurately provided to the user.

According to one aspect of the present invention, there is provided a service information providing apparatus comprising: a visitor area information acquiring means for acquiring visitor area information in which a mobile communication terminal is visiting; a preference genre determining means for determining, using service usage history information which is information related to a service used by the mobile communication terminal in the past, a preference genre of a user owning the mobile communication terminal; a shop information extracting means for extracting shop information related to a shop corresponding to the preference genre determined by the preference genre determining means from among the shop information registered in advance including genre information; a shop list transmitting means for generating, when a part or all of the visitor area acquired by the visitor area information acquiring means is included in a specific area registered in advance by the mobile communication terminal, a shop list based on the shop information extracted by the shop information extracting means and transmitting the shop list to the mobile communication terminal; a service information extracting means for extracting, when shop selection information indicating that a shop is selected from the shop list is received from the mobile communication terminal, service information related to a service provided by a shop corresponding to the shop selection information and belonging to the preference genre determined by the preference genre determining means from service information registered in advance including genre information; a location information receiving means for receiving location information transmitted from the mobile communication terminal and indicating a current location; and a service list transmitting means for generating, when the location information received by the location information receiving means matches shop location information included in the shop information corresponding to the shop selection information, a service list based on the service information extracted by the service information extracting means and transmitting the service list to the mobile communication terminal.

According to another aspect of the present invention, there is provided a service information providing method executed by a service information providing apparatus, comprising: a visitor area information acquiring step of acquiring visitor area information in which a mobile communication terminal is visiting; a preference genre determining step of determining, using service usage history information which is information related to a service used by the mobile communication terminal in the past, a preference genre of a user owning the mobile communication terminal; a shop information extracting step of extracting shop information related to a shop corresponding to the preference genre determined in the preference genre determining step from among the shop information registered in advance including genre information; a shop list transmitting step of generating, when a part or all of the visitor area acquired in the visitor area information acquiring step is included in a specific area registered in advance by the mobile communication terminal, a shop list based on the shop information extracted in the shop information extracting step and transmitting the shop list to the mobile communication terminal; a service information extracting step of extracting, when shop selection information indicating that a shop is selected from the shop list is received from the mobile communication terminal, service information related to a service provided by a shop corresponding to the shop selection information and belonging to the preference genre determined in the preference genre determining step from service information registered in advance including genre information; a location information receiving step of receiving location information transmitted from the mobile communication terminal and indicating a current location; and a service list transmitting step of generating, when the location information received in the location information receiving step matches shop location information included in the shop information corresponding to the shop selection information, a service list based on the service information extracted in the service information extracting step, and transmitting the service list to the mobile communication terminal.

According to these aspects of the present invention, when a user moves into a specific area which is registered in advance, a shop list describing shops which are present in the area and which match a preference genre of the user can be provided, and, when a shop is selected from the shop list, a service list describing a service object provided by the selected shop and matching the preference genre of the user can be provided. Therefore, service information desired by a user can be accurately provided.

According to another aspect of the present invention, the service information providing apparatus may further comprise a shop ranking calculating means for calculating, using the shop information extracted by the shop information extracting means and the service usage history information, a usage frequency ranking of a shop corresponding to the shop information, wherein the shop list transmitting means generates the shop list based on the usage frequency ranking of the shop calculated by the shop ranking calculating means and transmits the shop list to the mobile communication terminal. With such a configuration, information related to a shop with a higher usage frequency can be provided with a higher priority

According to another aspect of the present invention, the service information providing apparatus may further comprise a service ranking calculating means for calculating, using the service information extracted by the service information extracting means and the service usage history information, a usage frequency ranking of a service corresponding to the service information, wherein the service list transmitting means generates the service list based on the usage frequency ranking of the service calculated by the service ranking calculating means and transmits the service list to the mobile communication terminal. With such a configuration, information related to a service with a higher usage frequency can be provided with a higher priority.

According to another aspect of the present invention, in the service information providing apparatus, the service list transmitting means generates the service list when a service list request message for requesting provision of the service list is received from the mobile communication terminal. With such a configuration, the service list can be provided when the user explicitly requests provision of the service list.

According to the service information providing apparatus and the service information providing method of various aspects of the present invention, service information desired by a user can be accurately provided.

### BRIEF DESCRIPTION OF THE DRAWINGS

Fig. 1 is a diagram showing an example system structure of a communication system in an embodiment of the present invention.
Fig. 2 is a diagram showing an example functional structure of a service information providing apparatus shown in Fig. 1.
Fig. 3 is a diagram showing an example hardware structure of a service information providing apparatus shown in Fig. 1.
Fig. 4 is a diagram showing an example data structure of a service usage history database.
Fig. 5 is a diagram showing an example data structure of a shop information database.
Fig. 6 is a diagram showing an example data structure of a service information database.
Fig. 7 is a diagram showing a concrete example of a shop list.
Fig. 8 is a diagram showing a concrete example of a service list.
Fig. 9 is a sequence diagram showing a flow of a process when a service information providing apparatus provides a shop list to a portable phone.
Fig. 10 is a sequence diagram showing a flow of a process when a service information providing apparatus provides a service list to a portable phone.

### DESCRIPTION OF THE PREFERRED EMBODIMENTS

A preferred embodiment of a service information providing apparatus and a service information providing method according to the present invention will now be described with reference to drawings. In the drawings, same reference numerals are assigned to the same elements, and the description will not be repeated.

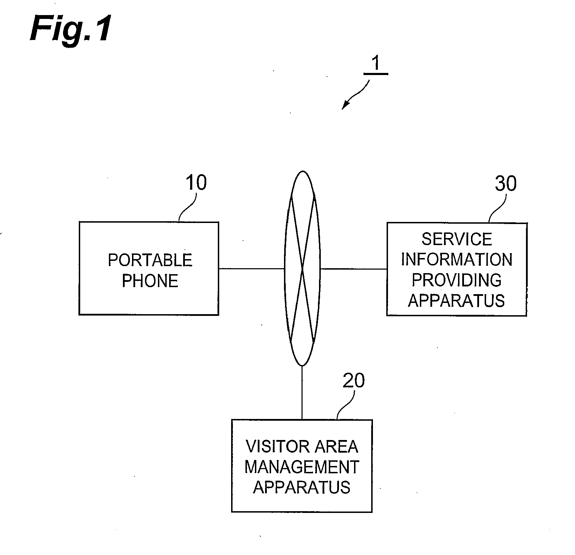

Fig. 1 is a diagram showing an example structure of a communication system 1 in a preferred embodiment of the present invention. As shown in Fig. 1, the communication system 1 comprises a portable phone 10, a visitor area management apparatus 20, and a service information providing apparatus 30. The portable phone 10, visitor area management apparatus 20, and service information providing apparatus 30 are connected via a communication line including a mobile communication network.

The portable phone 10 is a mobile communication terminal which wirelessly communicates with a base station which covers a wireless area in which the portable phone 10 is visiting and receives a calling service or a packet communication service. In the communication system 1 of the present embodiment, a portable phone 10 is described as a concrete example of the mobile communication terminal, but the concrete example of the mobile communication terminal is not limited to such a configuration and may alternatively be, for example, a personal handyphone system (PHS), a personal digital assistance (PDA) having a communication function, or the like.

The visitor area management apparatus 20 is an apparatus which manages an area in which the portable phone 10 is visiting based on position information including a visitor area ID transmitted from the portable phone 10,

The service information providing apparatus 30 is an apparatus which generates a shop list and a service list, both of which will be described later, according to a visitor area of the portable phone 10 and a service usage history and provides the shop list and service list to the portable phone 10.

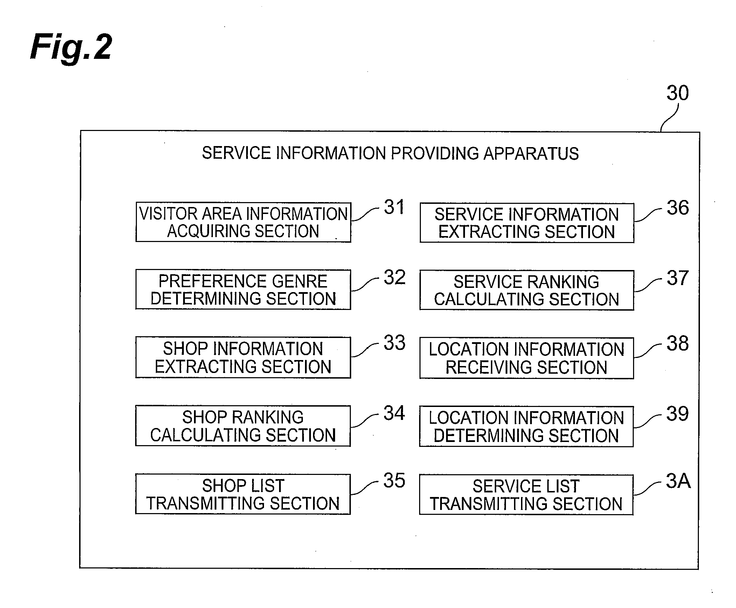

Fig. 2 is a functional structure diagram of the service information providing apparatus 30. As shown in Fig. 2, the service information providing apparatus 30 comprises, as functions, a visitor area information acquiring section 31 (visitor area information acquiring means), a preference genre determining section 32 (preference genre determining means), a shop information extracting section 33 (shop information extracting means), a shop ranking calculating section 34 (shop ranking calculating means), a shop list transmitting section 35 (shop list transmitting means), a service information extracting section 36 (service information extracting means), a service ranking calculating section 37 (service ranking calculating means), a location information receiving section 38 (location information receiving means), a location information determining section 39, and a service list transmitting section 3A (service list transmitting means).

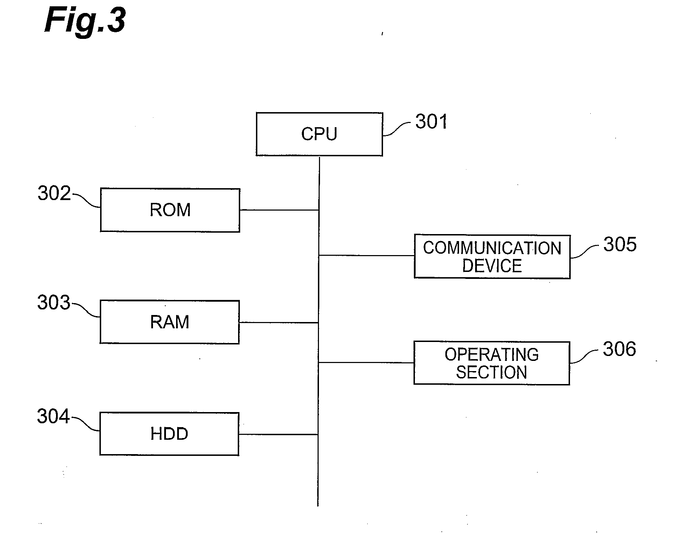

Fig. 3 is a hardware structure diagram of the service information providing apparatus 30. As shown in Fig. 3, the service information providing apparatus 30 is physically realized as a computer system comprising a CPU 301, a ROM 302, a RAM 303, an HDD 304, a communication device 305 which is a data transmission/reception device, and an operating section 306 which is an inputting device. The functions of the constituting elements shown in Fig. 2 are realized by the CPU 301 executing computer software installed in the ROM 302 or HDD 304. The HDD 304 also stores a service usage history database, a shop information database, and a service information database. Data structures of these databases will now be described.

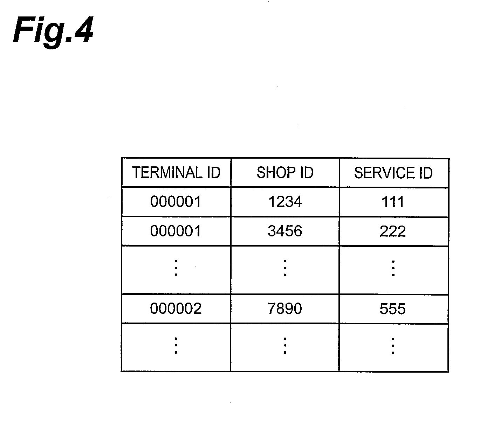

A data structure of the service usage history database will now be described with reference to Fig. 4. The service usage history database stores, as data items, service usage history information including, for example, a terminal ID, a shop ID, and a service ID. The terminal ID stores an ID for uniquely identifying a portable phone 10, a shop ID stores an ID for uniquely identifying a shop used by a user of the portable phone 10, and the service ID stores an ID for uniquely identifying a service object purchased by the user of the portable phone 10 in the shop. The service object includes, for example, products provided in restaurants or the like and services provided in entertainment facilities.

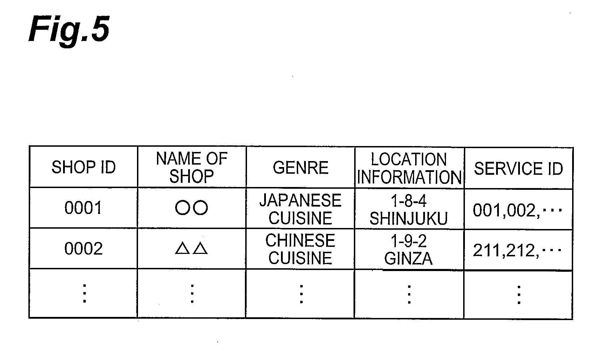

A data structure of the shop information database will now be described with reference to Fig. 5. The shop information database stores, as data items, shop information including, for example, a shop ID, a name of the shop, a genre, location information, and a service ID. The shop ID stores an ID for uniquely identifying the shop, the name of the shop stores a name of the shop, the genre stores a content of the genre, the location information stores information for identifying the location of the shop such as the address of the shop, and the service ID stores one or a plurality of ID(s) for uniquely identifying the service object(s) that can be purchased in the shop.

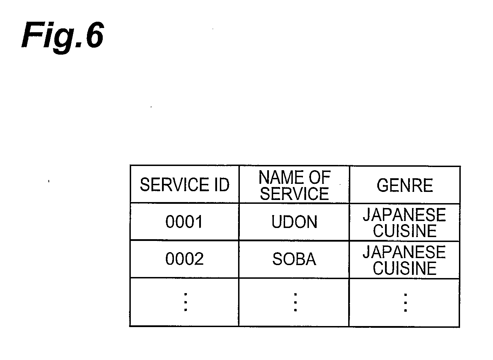

A data structure of the service information database will now be described with reference to Fig. 6. The service information database stores, as data items, service information including, for example, a service ID, a name of service, and a genre. The service ID stores an ID for uniquely identifying a service object, the name of service stores a name of the service, and the genre stores a content of the genre.

The functional elements of the service information providing apparatus 30 will now be described in detail with reference to Fig. 2.

The visitor area information acquiring section 31 acquires visitor area information in which the portable phone 10 is visiting from the visitor area management apparatus 20. More specifically, the visitor area information acquiring section 31 periodically transmits a visitor area request message for requesting transmission of the visitor area of the portable phone 10 to the visitor area management apparatus 20. The portable phone 10 to be a target of the visitor area request message is a portable phone registered in the service information providing apparatus 30 as desiring provision of service information. The visitor area information includes, for example, a concrete name of the area such as a "Shinjuku" area and "Ginza" area, base station code, etc. The method for acquiring the visitor area information by the service information providing apparatus 30 is not limited to such a configuration. For example, the visitor area information may be transmitted to the service information providing apparatus 30 when the visitor area management apparatus 20 receives, from the portable phone 10, position information indicating that the visitor area has been changed, so that the service information providing apparatus 30 acquires the visitor area information.

The preference genre determining section 32 determines a preference genre of the user owning the portable phone 10 using service usage history information stored in the service usage history database to be described later. More specifically, the preference genre determining section 32 extracts a service usage history based on the terminal ID of the portable phone 10, and categorizes the extracted service usage history by shop IDs and service IDs. In addition, the preference genre determining section 32 categorizes the categorized service usage history by genres corresponding to the shop IDs and service IDs, and calculates a number of usages of the service for each genre. With this process, a genre having a larger number of usages of service can be determined as the preference genre of the user of the portable phone 10.

The shop information extracting section 33 extracts, from the shop information database, shop information having a genre corresponding to the preference genre determined by the preference genre determining section 32.

The shop ranking calculating section 34 calculates a usage frequency ranking of shops included in shop information using the shop information extracted by the shop information extracting section 33 and the service usage history information stored in the service usage history database. More specifically, the shop ranking calculating section 34 searches the service usage history database using the shop ID included in the shop information extracted by the shop information extracting section 33 and counts a number of occurrences of the service usage history information having the shop ID. The shop ranking calculating section 34 calculates the usage frequency ranking of shops using the counted number of occurrences as the usage frequency and in the order of decreasing number of occurrences. In the present embodiment, a personal ranking by the user of the portable phone 10 and a ranking by all users are calculated as the usage frequency ranking.

The shop list transmitting section 35 determines as to whether or not the visitor area acquired by the visitor area information acquiring section 31 is included in a service target area registered in advance by the user of the portable phone 10. When the shop list transmitting section 35 determines that the visitor area is included in the service target area, the shop list transmitting section 35 generates a shop list based on the usage frequency ranking of shops calculated by the shop ranking calculating section 34 and transmits the shop list to the portable phone 10. The service target area is information indicating an area for which the user desires provision of the shop list and registered by the user in advance in the service information providing apparatus 30.

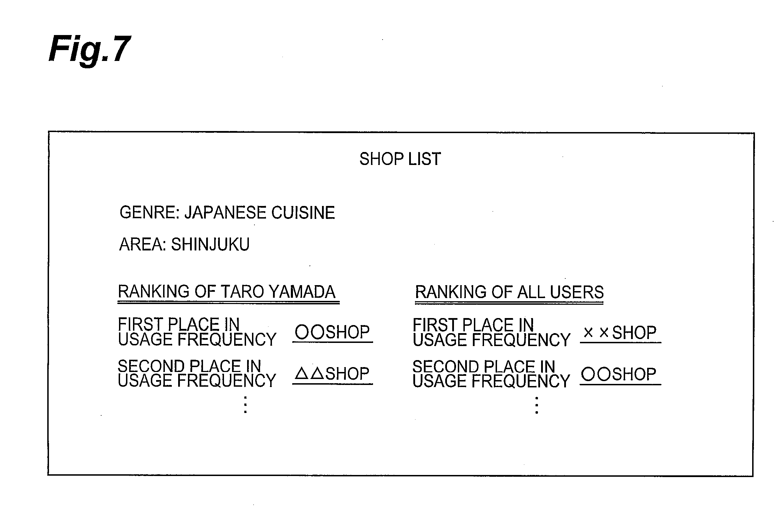

Fig. 7 shows a concrete example of the shop list. As shown in Fig. 7, in the shop list, for example, the preference genre, the visitor area, the personal ranking of the user, and the ranking of all users are displayed. In the shop list of Fig. 7, "Japanese cuisine" is displayed as the preference genre, "Shinjuku" is displayed as the visitor area, names of shops ranked high in the usage frequency ranking of the user among the shops of "Japanese cuisine" in "Shinjuku" are displayed as the personal ranking of the user, and names of shops ranked high in the usage frequency ranking of all users among the shops of "Japanese cuisine" in "Shinjuku" are displayed as the ranking of all users. When a name of a shop is selected from among the names of shops shown in Fig. 7 and fixed, shop selection information which is a message indicating that a name of a specific shop is selected is transmitted from the portable phone 10 to the service information providing apparatus 30. When the service information providing apparatus 30 receives the shop selection information, the service information providing apparatus 30 transmits detailed information of the selected shop to the portable phone 10. The detailed information of the shop includes, for example, an address of the shop, contact information, and contents of the provided services. The detailed information of the shop may be stored, for example, in the shop information database.

When the service information extracting section 36 of Fig. 2 receives the shop selection information from the portable phone 10, the service information extracting section 36 extracts, from the service information database, service information having a service ID belonging to the preference genre determined by the preference genre determining section 32 from among the service IDs of the shop information corresponding to the shop selection information. The shop selection information received from the portable phone 10 is temporarily stored in a memory. The shop selection information stored in the memory is deleted from the memory after a predetermined time has elapsed.

The service ranking calculating section 37 calculates a usage frequency ranking of services included in service information using the service information extracted by the service information extracting section 36 and the service usage history information stored in the service usage history database. More specifically, the service ranking calculating section 37 searches the service usage history database using the service ID included in the service information extracted by the service information extracting section 36 and counts a number of occurrences of the service usage history information having the service ID. The service ranking calculating section 37 calculates a usage frequency ranking of services using the counted number of occurrences as the usage frequency and in order of decreasing number of occurrences. In the present embodiment, a personal ranking of the user of the portable phone 10 and the ranking by all users are calculated as the usage frequency ranking. The service ranking calculating section 37 temporarily stores the calculated usage frequency ranking of services in a memory. The usage frequency ranking of services stored in the memory is deleted from the memory after a predetermined time has elapsed.

The location information receiving section 38 receives location information transmitted from the portable phone 10. The location information is information indicating an address of a shop stored in an RFID tag placed at the shop. The portable phone 10 transmits the location information included in the shop information read from the RFID tag to the service information providing apparatus 30 as a current location of the portable phone 10. The location information is not limited to that acquired from the RFID tag. For example, the portable phone 10 may be equipped with a GPS functionality, and latitude and longitude information measured by the GPS may be transmitted as the location information to the service information providing apparatus 30.

The location information determining section 39 determines as to whether or not the location information received by the location information receiving section 38 matches the location information of the shop information corresponding to the shop selection information. When it is determined in this determination that the information match, the service information providing apparatus 30 is set to a wait state until a service list request message for requesting provision of the service list is received from the portable phone 10.

When, on the other hand, the location information receiving section 38 determines that the location information do not match, the following processes are executed. First, the shop information extracting section 33 extracts, from the shop information database, shop information having the location information corresponding to the location information received by the location information receiving section 38. Then, the service information extracting section 36 extracts, from the service information database, service information having the service ID belonging to the preference genre determined by the preference genre determining section 32 from among the service IDs of shop information corresponding to the extracted shop selection information. Next, the service ranking calculating section 37 calculates a usage frequency ranking of services included in the service information using the service information extracted by the service information extracting section 36 and the service usage history information stored in the service usage history database, and temporarily stores the calculated usage frequency ranking of services in a memory.

It is also possible to provide, in correspondence to the usage frequency ranking information of the services, flag information indicating as to whether or not the location information match. By providing the flag information, it is possible to allow attachment of a content of a special offer to the service list according to the content of the flag information. For example, when the flag information indicates that the location information match, it can be considered that the user may visit the shop by viewing the service list, and, thus, a service list to which a special offer such as coupon information is attached may be provided so that a customer may be guided to the shop.

When the service list transmitting section 3A receives a service list request message from the portable phone 10, the service list transmitting section 3A generates a service list based on the usage frequency ranking of services temporarily stored in the memory, and transmits the service list to the portable phone 10 which has transmitted the service information request message. The timing of the generation and transmission of the service list is not limited to timing when the service list request message is received. For example, it is possible to generate and transmit a service list based on the usage frequency ranking of services without receiving the service list request message.

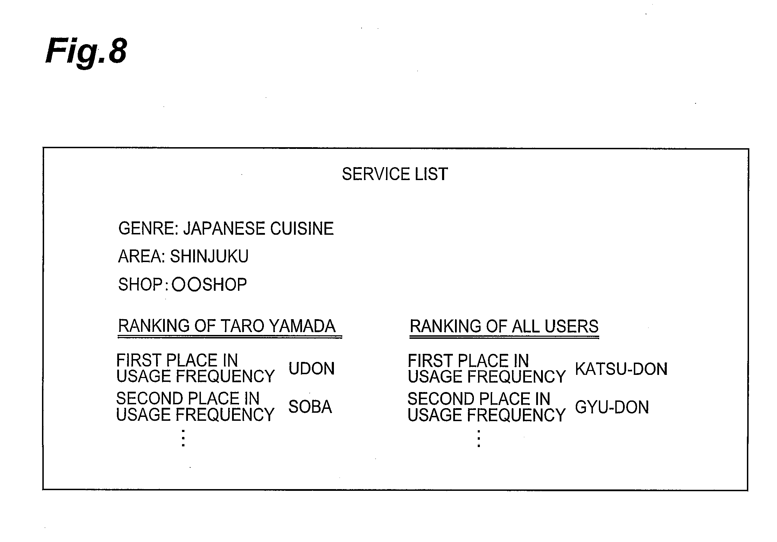

Fig. 8 shows a concrete example of the service list. As shown in Fig. 8, the service list displays, for example, a preference genre, a visitor area, a visiting shop, a personal ranking of the user, and a ranking by all users. In the service list shown in Fig. 8, "Japanese cuisine" is displayed as the preference genre, "Shinjuku" is displayed as the visitor area, "○○ shop" is displayed as the visiting shop, names of services ranked high in the usage frequency ranking of the user among the service objects provided in the "oo shop" of "Japanese cuisine" in "Shinjuku" are displayed as the personal ranking of the user, and names of services ranked high in the usage frequency ranking by all users among the service objects provided in the "oo shop" of "Japanese cuisine" are displayed in "Shinjuku" as the ranking by all users.

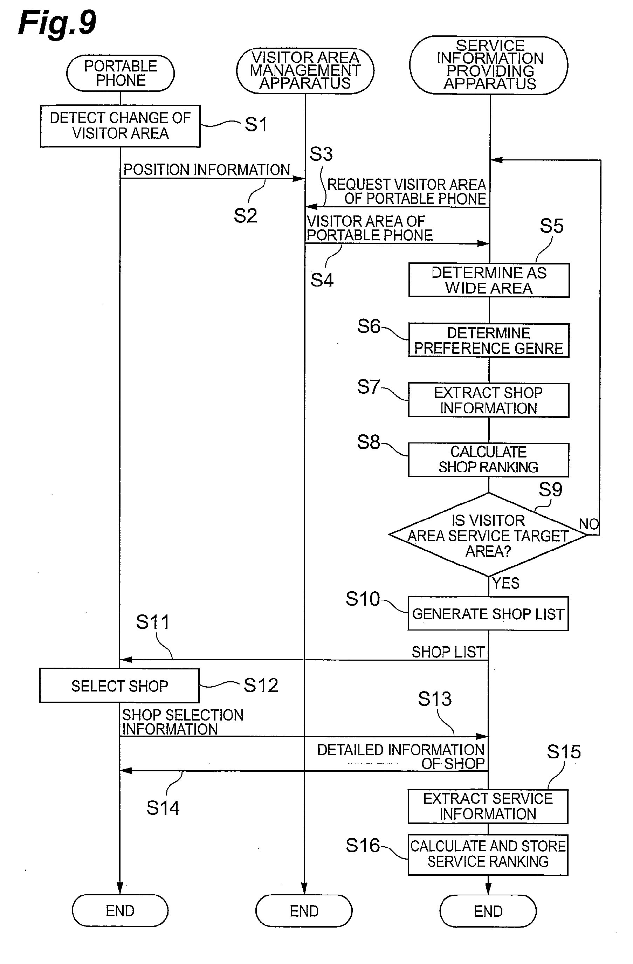

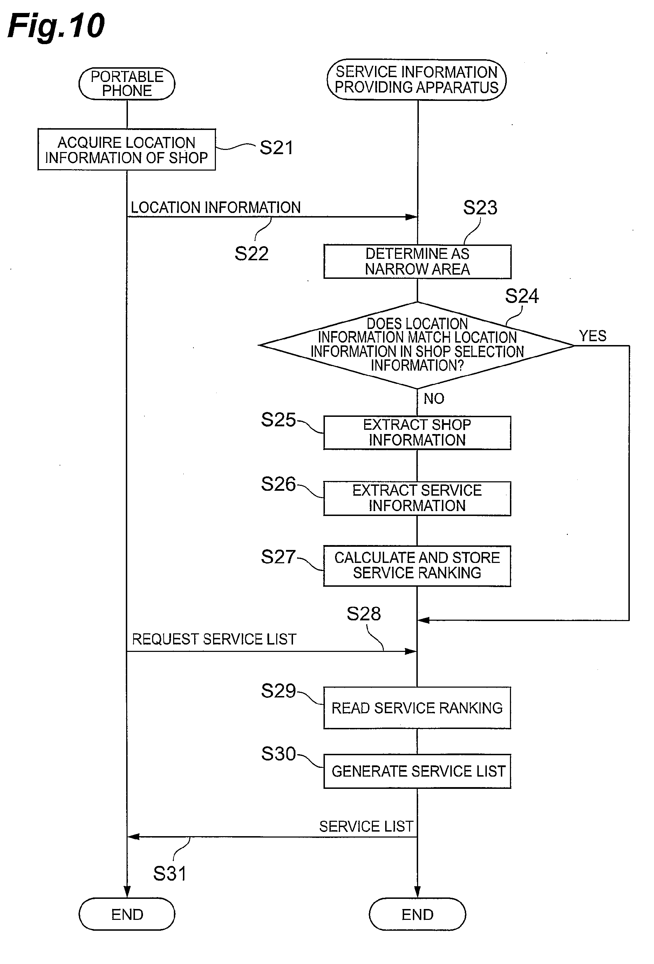

Next, an operation of the communication system 1 in the present embodiment will be described with reference to Figs. 9 and 10. First, a flow of a process when the service information providing apparatus 30 provides a shop list to the portable phone 10 will be described with reference to Fig. 9.

First, when the portable phone 10 detects a change of visitor area based on announcement information received from the mobile communication network (step S1), the portable phone 10 transmits position information including the new visitor area ID to the visitor area management apparatus 20 (step S2). The processes of steps S 1 and S2 are continuously and repeatedly executed.

Then, the visitor area information acquiring section 31 of the service information providing apparatus 30 transmits, to the visitor area management apparatus 20, a visitor area request message for requesting transmission of the visitor area of the portable phone 10 (step S3). The visitor area management apparatus 20 receiving the visitor area request message notifies the visitor area of the portable phone 10 to the service information providing apparatus 30 (step S4).

Next, the service information providing apparatus 30 receives the visitor area notified from the visitor area management apparatus 20, determines that the portable phone 10 is visiting a wide area (step S5), and executes the following shop list providing process.

First, the preference genre determining section 32 of the service information providing apparatus 30 determines the preference genre of the user owning the portable phone 10 using the service usage history information stored in the service usage history database (step S6).

Then, the shop information extracting section 33 of the service information providing apparatus 30 extracts, from the shop information database, shop information having a genre corresponding to the preference genre determined by the preference genre determining section 32 (step S7).

Next, the shop ranking calculating section 34 of the service information providing apparatus 30 calculates a usage frequency ranking of shops included in the shop information using the shop information extracted by the shop information extracting section 33 and the service usage history information stored in the service usage history database (step S8).

Then, the shop list transmitting section 35 of the service information providing apparatus 30 determines as to whether or not the visitor area acquired by the visitor area information acquiring section 31 is included in a specific area registered in advance by the user of the portable phone 10 (step S9). When a result of the determination is NO (step S9; NO), the process jumps to the above-described step S3.

When, on the other hand, the result of the determination in step S9 is YES (step S9; YES), the shop list transmitting section 35 generates a shop list based on the usage frequency ranking of shops calculated by the shop ranking calculating section 34 (step S10), and transmits the shop list to the portable phone 10 (step S11).

Then, when a name of a shop is selected from among the names of shops in the shop list displayed on a screen of the portable phone 10 and is fixed (step S12), shop selection information which is a message indicating that a name of a shop is selected and fixed is transmitted from the portable phone 10 to the service information providing apparatus 3 0 (step S13).

Next, the service information providing apparatus 30 transmits detailed information of the shop corresponding to the shop selection information to the portable phone 10 (step S14) and temporarily stores the shop selection information in a memory.

Then, the service information extracting section 36 of the service information providing apparatus 30 extracts, from the service information database, service information having a service ID belonging to the preference genre determined by the preference genre determining section 32, from among the service IDs of the shop information corresponding to the shop selection information (step S 15).

Then, the service ranking calculating section 37 of the service information providing apparatus 30 calculates a usage frequency ranking of services included in the service information using the service information extracted by the service information extracting section 36 and the service usage history information stored in the service usage history database, and stores the usage frequency ranking of services in the memory (S16).

Next, a flow of a process when the service information providing apparatus 30 provides a service list to the portable phone 10 will be described with reference to Fig. 10.

First, the portable phone 10 reads shop information from an RFID tag placed in a shop visited by the user and acquires location information of the shop including the shop information (step S21). The portable phone 10 transmits the acquired location information to the service information providing apparatus 30 (step S22).

Then, the service information providing apparatus 30 receives the location information transmitted from the portable phone 10, determines that the portable phone 10 is visiting a narrow area (step S23), and executes the following service list providing process.

First, the location information determining section 39 of the service information providing apparatus 30 determines as to whether or not the location information received by the location information receiving section 38 matches the location information of the shop information corresponding to the shop selection information received in step S13 (step S24). When a result of this determination is YES (step S24; YES), the process jumps to step S28 to be described later.

When, on the other hand, the result of the determination in step S24 is NO (step S24; NO), the shop information extracting section 33 of the service information providing apparatus 30 extracts, from the shop information database, shop information having location information corresponding to the location information received by the location information receiving section 38 (step S25).

Then, the service information extracting section 36 of the service information providing apparatus 30 extracts, from the service information database, service information having a service ID belonging to the preference genre determined in the above-described step S6 from among service IDs of shop information corresponding to the shop selection information extracted by the shop information extracting section 33 (step S26).

Next, the service ranking calculating section 37 of the service information providing apparatus 30 calculates a usage frequency ranking of services included in the service information using the service information extracted by the service information extracting section 36 and the service usage history information stored in the service usage history database, and temporarily stores the calculated usage frequency ranking of services in a memory (step S27).

Then, the portable phone 10 transmits a service list request message for requesting provision of a service list to the service information providing apparatus 30 (step S28).

Next, when the service list transmitting section 3A of the service information providing apparatus 30 receives the service list request message from the portable phone 10, the service list transmitting section 3A reads the usage frequency ranking of services from the memory (step S29), and generates a service list based on the usage frequency ranking of services (step S30). The service list transmitting section 3A then transmits the generated service list to the portable phone 10 (step S31).

As described, with the service information providing apparatus 30 of the present embodiment, when a user moves into a specific area which is registered in advance, a shop list describing shops in the area and matching the preference genre of the user can be provided, and, when a shop is selected from the shop list, a service list describing service objects provided in the selected shop and matching the preference genre of the user can be provided. Therefore, it is possible to accurately provide service information desired by the user.

Although the above-described embodiment is described for a case where the category of the service information to be provided (shop list and service list) is restaurants, the category is not limited to restaurants. For example, the present invention can be applied for a category of entertainment facility or the like. Alternatively, it is also possible to provide information for a plurality of categories. In this case, the user may register a default category in advance. In addition, it is also possible to employ a configuration in which, when service information of a category is provided within a same visitor area, service information of another category is provided the next time.

## Claims

1. A service information providing apparatus comprising:
a visitor area information acquiring means for acquiring visitor area information in which a mobile communication terminal is visiting;
a preference genre determining means for determining, using service usage history information which is information related to a service used by the mobile communication terminal in the past, a preference genre of a user owning the mobile communication terminal;
a shop information extracting means for extracting shop information related to a shop corresponding to the preference genre determined by the preference genre determining means from among the shop information registered in advance including genre information;
a shop list transmitting means for generating, when a part or all of the visitor area acquired by the visitor area information acquiring means is included in a specific area registered in advance by the mobile communication terminal, a shop list based on the shop information extracted by the shop information extracting means and transmitting the shop list to the mobile communication terminal;
a service information extracting means for extracting, when shop selection information indicating that a shop is selected from the shop list is received from the mobile communication terminal, service information related to a service provided by a shop corresponding to the shop selection information and belonging to the preference genre determined by the preference genre determining means from service information registered in advance including genre information;
a location information receiving means for receiving location information transmitted from the mobile communication terminal and indicating a current location; and
a service list transmitting means for generating, when the location information received by the location information receiving means matches shop location information included in the shop information corresponding to the shop selection information, a service list based on the service information extracted by the service information extracting means and transmitting the service list to the mobile communication terminal.

2. The service information providing apparatus according to Claim 1, further comprising
a shop ranking calculating means for calculating, using the shop information extracted by the shop information extracting means and the service usage history information, a usage frequency ranking of a shop corresponding to the shop information,
wherein the shop list transmitting means generates the shop list based on the usage frequency ranking of the shop calculated by the shop ranking calculating means and transmits the shop list to the mobile communication terminal.

3. The service information providing apparatus according to Claim 1 or 2, further comprising
a service ranking calculating means for calculating, using the service information extracted by the service information extracting means and the service usage history information, a usage frequency ranking of a service corresponding to the service information,
wherein the service list transmitting means generates the service list based on the usage frequency ranking of the service calculated by the service ranking calculating means and transmits the service list to the mobile communication terminal.

4. The service information providing apparatus according to any one of Claims 1 to 3,
wherein the service list transmitting means generates the service list when a service list request message for requesting provision of the service list is received from the mobile communication terminal.

5. A service information providing method executed by a service information providing apparatus, comprising:
a visitor area information acquiring step of acquiring visitor area information in which a mobile communication terminal is visiting;
a preference genre determining step of determining, using service usage history information which is information related to a service used by the mobile communication terminal in the past, a preference genre of a user owning the mobile communication terminal;
a shop information extracting step of extracting shop information related to a shop corresponding to the preference genre determined in the preference genre determining step from among the shop information registered in advance including genre information;
a shop list transmitting step of generating, when a part or all of the visitor area acquired in the visitor area information acquiring step is included in a specific area registered in advance by the mobile communication terminal, a shop list based on the shop information extracted in the shop information extracting step and transmitting the shop list to the mobile communication terminal;
a service information extracting step of extracting, when shop selection information indicating that a shop is selected from the shop list is received from the mobile communication terminal, service information related to a service provided by a shop corresponding to the shop selection information and belonging to the preference genre determined in the preference genre determining step from service information registered in advance including genre information;
a location information receiving step of receiving location information transmitted from the mobile communication terminal and indicating a current location; and
a service list transmitting step of generating, when the location information received in the location information receiving step matches shop location information included in the shop information corresponding to the shop selection information, a service list based on the service information extracted in the service information extracting step, and transmitting the service list to the mobile communication terminal.
